# EUROPEAN PATENT SPECIFICATION

(11) **EP 2 468 986 B1**
(45) Date of publication and mention of the grant of the patent: **05.12.2018**
(21) Application number: 11193511.0
(22) Date of filing: 14.12.2011
(51) Int. Cl.: E04H 9/02, E04B 1/24, E04H 9/14

(54) **Construction provided with a lateral bracing system**
Konstruktion mit seitlichem Stützsystem
Ossature avec système de renfort latéral

(30) Priority: 14.12.2010 US 967462
(43) Date of publication of application: 27.06.2012
(73) Proprietor: Simpson Strong-Tie Company, Inc., Pleasanton, CA 94588 (US)
(72) Inventor: Hiriyur, Badri, Mountain House, CA California 95391 (US); Pryor, Steven E., Dublin, CA California 94568 (US)
(74) Representative: Dehns

(56) References cited:
- EP-A2- 1 936 053
- WO-A1-98/31512
- JP-A- 2000 144 901
- JP-A- 2002 371 626
- JP-A- 2005 350 906
- US-A- 6 073 405
- US-A1- 2005 257 451

## Description

### BACKGROUND OF THE INVENTION

### Field of the Invention

The present invention relates to hysteretic damping for structures used in light-framed constructions, and in particular to a lateral bracing system constructed to provide a high degree of energy dissipation through hysteretic damping along with high initial stiffness so that energy is dissipated at low force thresholds within a light-framed construction.

### Description of the Related Art

Shear stresses due to natural phenomena such as seismic activity and high winds can have devastating effects on the structural integrity of light-framed constructions. Lateral forces generated during such natural phenomena may cause the top portion of a wall to move laterally with respect to the bottom portion of the wall, which movement can result in damage or structural failure of the wall and, in some instances, collapse of the building.

In constructions such as residences and small buildings, lateral bracing systems were developed to counteract the potentially devastating effects of shear stress on the structural integrity of light-framed constructions. Although various designs are known, one type of lateral bracing system includes vertical studs spaced from each other and horizontal beams affixed to and extending between the studs. The beams are affixed to the studs in a manner aimed at increasing structural performance of the connection under lateral loads.

Many conventional lateral bracing systems perform well initially under lateral loads, but yield and fail upon the repetitive lateral loads which often occur during significant seismic activity and high winds. Upon appreciable yield or failure of the lateral bracing system, the entire system must be replaced.

Another consideration unrelated to loading of structures is the ease and effectiveness with which such structures may be erected by crews at a worksite. One task which adds to the time, complexity and cost of constructions is having to weld components together at the worksite. Bolted connections are typically preferred, in that they may be accomplished more quickly, effectively and without the additional equipment and labor costs associated with welding.
JP2000144901 discloses a splice plate and beam joint construction. JP2005350906 discloses a beam-column joining structure. EP1936053 discloses a moment frame connector. US2005/257451 discloses a moment frame links wall.

### SUMMARY

According to an aspect there is provided a construction as claimed in claim 1. According to another aspect there is provided a method of assembling a construction as claimed in claim 8.

Embodiments of the present invention, roughly described, relate to a lateral bracing system for affixing a column to a beam in a construction. In arrangements not forming part of the present invention, the lateral bracing system includes a pair of buckling restraint blocks, one each welded to a top and bottom flange of a beam. Each buckling restraint block includes one or more bores formed through a center of the block. The lateral bracing system further includes at least one yield link for each buckling restraint block. Each yield link includes a first end affixed to the column, and a second end fit through a bore in a buckling restraint block and affixed to an end of the buckling restraint block.

The lateral bracing system has sufficient stiffness and rigidity to provide a high degree of resistance to deflection under applied lateral loads. However, at lateral loads above a controllable and predictable level, the structure of the present arrangement provides for stable yielding of the yield links. In this way, the applied lateral loads are hysteretically dampened from the system, and a high degree of energy is dissipated, thereby preventing damage to the frame. Moreover, the energy dissipation and stable yielding of the yield links allow the frame to withstand repeated deflection under lateral loads without failure.

In arrangements, a beam may be delivered to the worksite having the buckling restraint blocks welded, glued or otherwise affixed thereto. Once at the worksite, the yield links may be inserted into the bores in the buckling restraint blocks and affixed to the buckling restraint blocks and columns. Thus, minimal fabrication of the lateral bracing system of the present arrangement is required at the worksite.

In an embodiment, the lateral bracing system may include a pair of buckling restraint assemblies which are provided directly between a beam and a column. In such an embodiment, all connections between each buckling restraint assembly and the beam or column may be made with bolts. The all-bolt assembly facilitates assembly at the jobsite.

### BRIEF DESCRIPTION OF THE DRAWINGS

FIGURE 1 is a perspective view of a beam connected to a column by a lateral bracing system.
FIGURE 2 is a front view of the lateral bracing system according to Fig. 1.
FIGURES 3-5 are perspective views of a beam connected to a column by a lateral bracing system.
FIGURE 6 is a front view of the lateral bracing system shown in Figs. 3-5.
FIGURE 7 is a top view of the lateral bracing system shown in Figs. 3-5.
FIGURE 8 is a side view of a yield link of the lateral bracing system shown in Figs. 3-5.
FIGURE 9 is an end view of a buckling restraint block of the lateral bracing system shown in Figs. 3-5.
FIGURE 10 is a side view of a buckling restraint block of the lateral bracing system shown in Figs. 3-5.
FIGURE 11 is a side view of an alternative yield link.
FIGURE 12 is a side view of an alternative buckling restraint block.
FIGURE 13 is a graph of lateral load vs. lateral displacement of the frame.
FIGURE 14 is a perspective view of a pair of buckling restraint assemblies affixing a beam directly to a column.
FIGURE 15 is a partially dissembled perspective view of a buckling restraint assembly of Fig. 14.
FIGURE 16 is a side view of a pair of buckling restraint assemblies affixing a beam directly to a column.
FIGURE 17 is an exploded perspective view of a buckling restraint assembly of Figs. 14 and 16.

### DETAILED DESCRIPTION

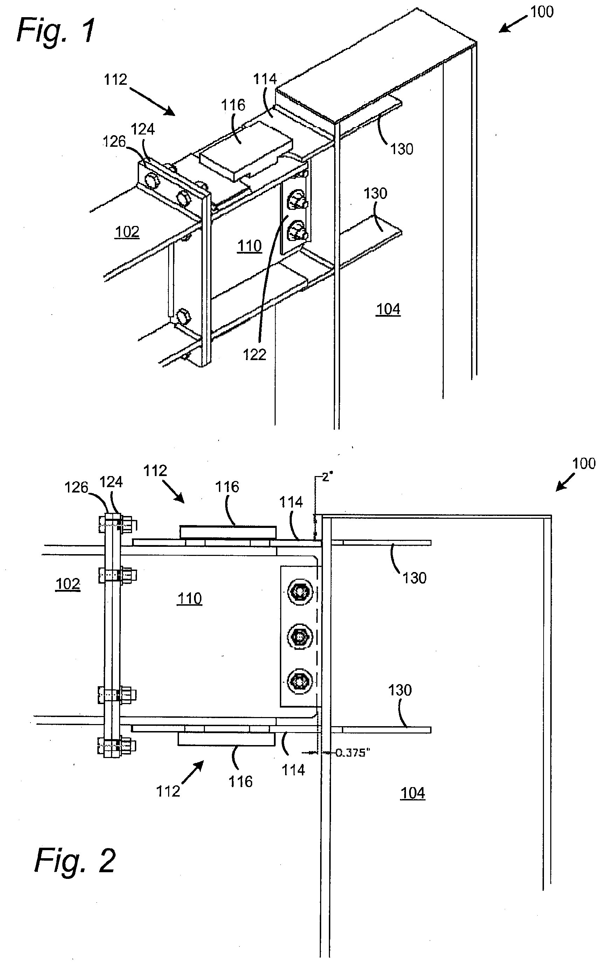

The present invention will now be described with reference to Figs. 1 through 17, which in arrangements not forming part of the invention relate to a lateral bracing system having high initial stiffness and including yield links capable of effectively dissipating energy generated within the lateral bracing system under lateral loads. It is understood that the present invention may be embodied in many different forms and should not be construed as being limited to the embodiments set forth herein. Rather these embodiments are provided so that this disclosure will be thorough and complete and will fully convey the invention to those skilled in the art. Indeed, the invention is intended to cover alternatives, modifications and equivalents of these embodiments, which are included within the scope of the invention as defined by the appended claims. Furthermore, in the following detailed description of the present invention, numerous specific details are set forth in order to provide a thorough understanding of the present invention. However, it will be clear to those of ordinary skill in the art that the present invention may be practiced without such specific details.

Referring now to Figs. 1 and 2, there is shown a frame 100 comprised in part of a horizontal beam 102 affixed to a vertical column 104. Each of the beam 102 and column 104 includes an opposed pair of flanges connected by a central diaphragm. Although referred to as a vertical column and a horizontal beam, it is understood that the column and beam may be affixed to each other at angles other than 90° in alternative arrangements. The beam 102 is affixed to the column 104 by means of a beam stub 110 including a lateral bracing system. The lateral bracing system is comprised of a pair of buckling-restrained braced devices 112, one on each of the top and bottom flanges of beam stub 110. Each buckling-restrained braced device 112 includes a flat, "dog-bone" shaped yield link 114 welded or glued at its first end to a flange of the beam stub 110 and welded or glued at its second end to a flange of the column 104 ("dog bone" shaped in that it is narrower at a center portion than at its end portions). Covering the center portion of each yield link 114 is a buckling restraint block 116. Blocks 116 are welded or glued to the respective flanges of the beam stub 110.

A shear tab 122 may further be provided between the beam stub 110 and column 104. The shear tab 122 may be affixed as by welding, gluing or bolting to a flange of column 104 and as by welding, gluing or bolting to the central diaphragm of beam stub 110. The beam stub 110 additionally includes an end plate 124 welded at an end of the beam stub opposite shear tab 122. End plate 124 may be bolted to a similar end plate 126 to affix the beam 102 to the beam stub 110 as explained hereinafter.

In operation, the pair of buckling-restrained braced devices 112 operate in tandem to oppose rotation of the beam relative to the column (*i.e.,* rotation about the shear tab 122) under a lateral load. Attempted rotation in a first direction will place the first of the devices 112 in tension and the second of the devices in compression. Attempted rotation in the opposite direction will place the first of the devices in compression and the second in tension.

The yield link 114 of the respective devices 112 provides high initial stiffness and tensile resistance to relative movement between the column 104 and the beam 102 under lateral loads, but provides stable yielding and energy dissipation under lateral loads above a predictable and controlled level. In particular, the bending strength of the column and beam could be designed to exceed the moment capacity of the yield links 114, and in particular, the thinner center portions of yield links 114. Thus, the yield links 114 yield under lateral loads before yielding or failure of the column or beam, and any damage is limited to the yield links which may be easily removed and replaced. The buckling restraint blocks 116 prevent buckling of the yield links under a compressive load. The shear tab 122 is provided to oppose vertical shear (*i.e.,* along the length of column 104) under a vertical load.

Moreover, the lateral bracing system provided between beam 102 and column 104 as described with respect to the above and below arrangements allows the omission of the lateral-torsional buckling restraint system conventionally provided as part of the beam. That is, in prior art systems, a lateral-torsional buckling restraint system was provided as part of the beam to yield in the event of excessive lateral loads. These lateral-torsional buckling restraint systems include a yield link and lateral braces to prevent buckling of the beam. Through the use of the lateral bracing system according to the present arrangement, the lateral-torsional buckling restraint system found on the beam in the prior art may be omitted. Having the ability to control, via a finite cap to the link moment capacity, the input demands on the beam through the lateral bracing system of the present arrangement, that is separate from the beam itself, allows the beam to be designed without bracing. It also allows the beams and columns to be designed to remain elastic at the level of ultimate yield-link connection moment capacity.

Upon lateral loads, the yield links 114 exert forces on the flange of the column 104 to which the yield links are attached. Accordingly, continuity plates 130 may optionally be affixed to the affected flange of column 104 to oppose the forces exerted by the yield links.

As explained in the Background section, it is desirable to avoid welding at the worksite. Accordingly, in arrangements, the assembly and connection of beam 102 and column 104 may be accomplished as follows. Prior to arriving at the worksite, the first end of the yield links 114 and the buckling-restraint blocks 116 may be welded or glued to the beam stub 110. The end plate 124 may also be welded or glued to the stub 110.

The beam stub 110 may then be welded or glued to column 104 by welding/gluing the second end of the yield links 114 to the flange of column 104, and welding/gluing the shear tab to the diaphragm of column 104. The shear tab may then be bolted to the diaphragm of the beam stub 110. The joined beam stub 110 and column 104 may then be delivered to the worksite. The inclusion of beam stub 110 allows all welding/gluing to take place before the column arrives at the worksite. The end plate 126 may be welded or glued to the beam 102 and the beam may then be delivered to the worksite. Once at the worksite, the beam 102 may be affixed to the beam stub 110 by bolting the end plates 124 and 126 together.

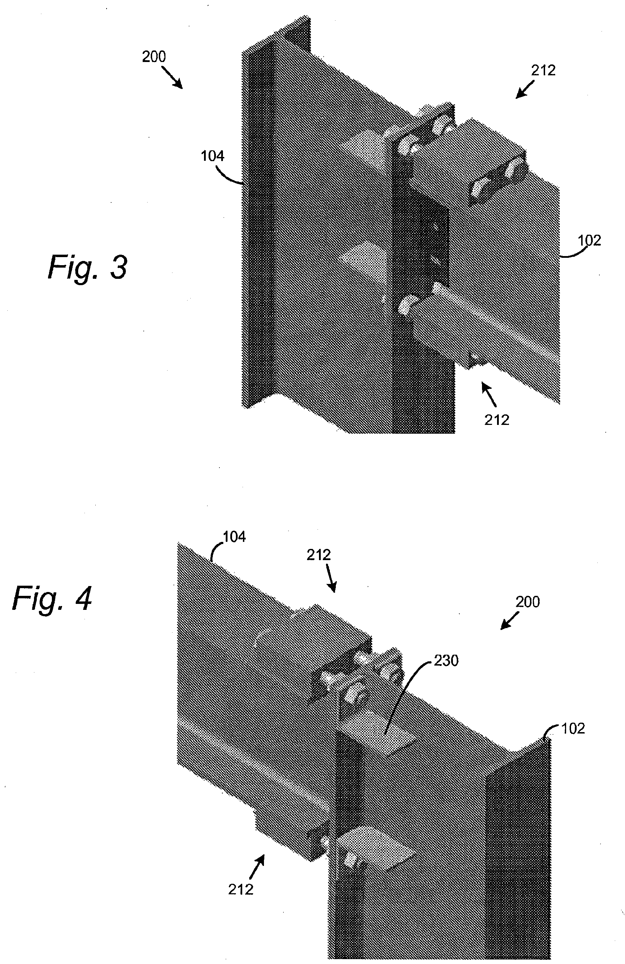

An alternative arrangement not forming part of the present invention is now explained with respect to Figs. 3 through 12. In this arrangement a lateral bracing system is provided which allows the omission of the beam stub 110 and provides a simpler yet effective design. Referring initially to Figs. 3 through 7, a frame 200 is comprised in part of a horizontal beam 102 affixed to a vertical column 104. Although referred to as a vertical column and a horizontal beam, it is understood that the column and beam may be affixed to each other at angles other than 90° in alternative arrangements.

The beam 102 is affixed to the column 104 by means of a lateral bracing system. The lateral bracing system is comprised of a pair of buckling-restrained braced devices 212, one on each of the top and bottom flanges of beam 102. Each buckling-restrained braced device 212 includes one or more cylindrical yield links 214, each including threads at its ends as explained hereinafter. Each set of one or more yield links 214 may be provided within a buckling restraint block 216 which is welded, glued or otherwise affixed to the upper and lower flanges of beam 102.

A shear tab 222 may further be provided between the beam 102 and column 104. The shear tab 122 may be affixed as by welding, gluing or bolting to a flange of column 104 and as by welding, gluing or bolting to the central diaphragm of beam 102. Column flange stiffeners 230 may optionally be affixed to the flange of column 104 to oppose the forces exerted by the yield links.

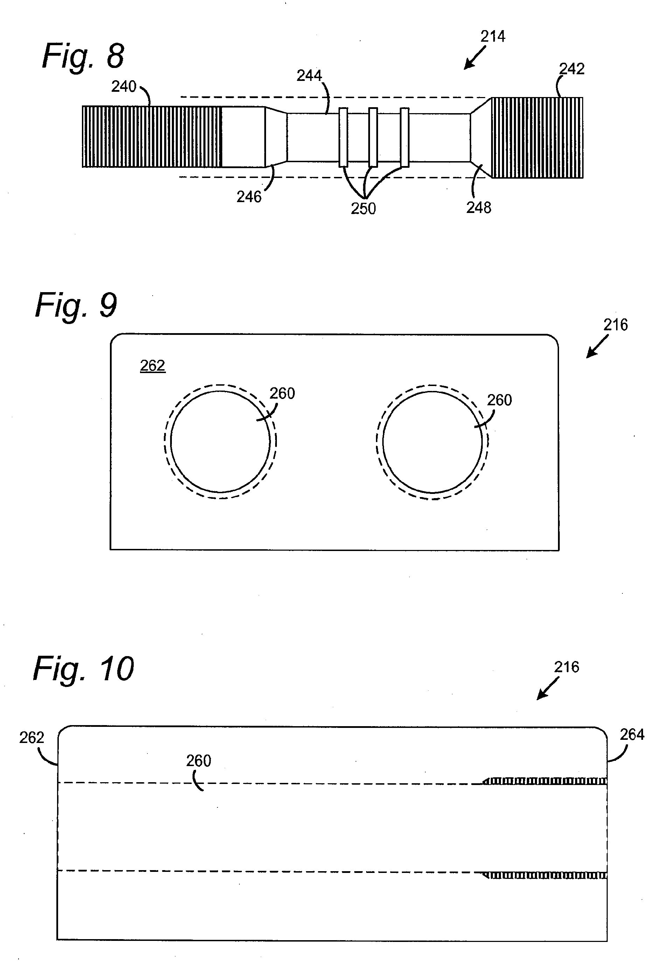

Fig. 8 shows a side view of an arrangement of a cylindrical yield link 214 and Figs. 9 and 10 show end and side views, respectively, of an arrangement of a buckling restraint block 216. Cylindrical yield link 214 may be formed of steel and includes first and second threaded ends 240, 242, and a center portion 244 between ends 240 and 242. Center portion 244 preferably has a smaller diameter than ends 240, 242 so that, upon yielding as explained hereinafter, the yield link 214 yields at center portion 244. Tapered sections 246 and 248 may be provided to smoothly transition from the diameter of ends 240, 242 to center portion 244. Although not shown, ends 240 and 242 may be chamfered to allow easy insertion into the buckling restraint block 216. Center portion 244 may include ribs 250, the purpose of which is explained hereinafter. It may be possible to form center portion 244 of a different material than ends 240 and 242, where the center portion has a lower modulus of elasticity. In such an arrangement, the center portion may be provided with the same diameter as end 240, and still be the first portion to yield upon tensile stresses above the center portion yield point.

In the arrangement of Fig 8, the end 242 may have a larger diameter than end 240. As one example, end 242 may have a diameter of 33.0 mm (1.30 inches), end 240 may have a diameter of 31.8 mm (1.25 inches), and center portion 244 may have a diameter of 25.4 mm (1.00 inch), except at ribs 250, which may have a diameter of 31.8 mm (1.25 inches). It is understood that each of the above dimensions may vary above and below that set forth, either proportionately or disproportionately to each other, in alternative arrangements.

Buckling restraint block 216 may be a block of metal such as aluminum or steel with one or more bores 260 formed therethrough for receiving the one or more yield links 214. Bores 260 may have a diameter which is approximately the same as the diameter of ribs 250 and/or end 240, with the end 264 being slightly larger to receive threaded end 242 of yield links 214. The length (along the length of beam 102) of block 216 may for example be 165 mm (6.50 inches), the width (across the width of the flanges of beam 102) may be approximately equal to or slightly less than the width of the flanges of beam 102, such as for example 178 mm (7.00 inches), and the block 216 may have a height of 63.5 mm (2.50 inches). When block 216 includes a pair of bores 260, the bores may be spaced from each other 102 mm (4.00 inches), centerline to centerline. It is understood that each of these dimensions may vary, either proportionately or disproportionately to each other, in alternative arrangements.

The block 216 may include an end 262, through which end 240 of yield link 214 protrudes when the device 112 is assembled as explained below, and an end 264 opposite end 262. A portion of bores 260 may be threaded adjacent end 264, for receiving threaded end 242 of the yield link as explained below.

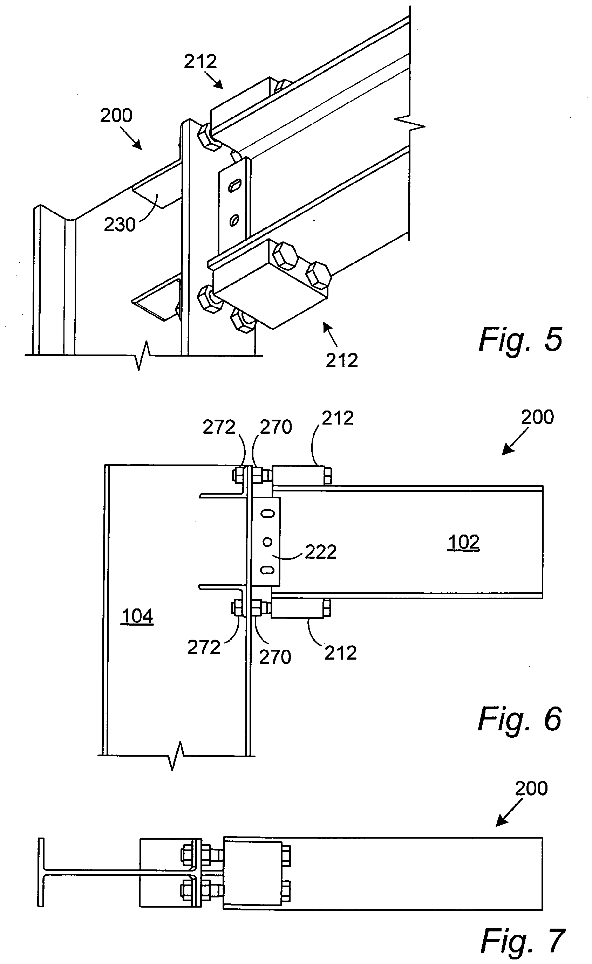

Beam 102 may be delivered to the worksite having block 216 welded, glued or otherwise affixed thereto. Column may be delivered to the worksite having shear tab 222 welded, glued or otherwise affixed thereto. Referring now to Figs. 6 through 10, once at the worksite, yield links 214 may be inserted into bores 260, with end 240 of yield link 214 inserted first into end 264 of block 216 (*i.e.,* right to left from the perspective of Figs. 6 and 7). The smaller diameter portions 240, 244 and 250 of the yield link pass through the larger diameter bore 260 until threaded yield link end 242 engages the threaded end of the bore. At that point, end 242 may be threaded into block end 264 to affix the yield link 214 to the buckling restraint block 216. The end 242 of yield link 214 may include a head to drive the link into the block, but the head may be omitted in alternative arrangements.

For each yield link 214, the link is screwed in until link end 240 protrudes from block end 262. As seen for example in Fig. 6, a nut 270 is then threaded onto link end 240, the end 240 passes through a hole formed in the flange of column 104, and a second nut 272 is threaded onto end 240. Once nuts 270 and 272 are tightened down on opposed sides of the column flange, the buckling-restrained braced device 212 is fixed in position to oppose movement between beam 102 and column 104.

In particular, the pair of buckling-restrained braced devices 212 operate in tandem to oppose rotation of the beam 102 relative to the column 104 under a lateral load. The yield link 214 of the respective devices 212 provides high initial stiffness and tensile resistance to relative movement between the column 104 and the beam 102 under lateral loads, but provides stable yielding at center portion 244 and energy dissipation under lateral loads above a predictable and controlled level. In particular, bending strength of the column and beam could be designed to exceed the moment capacity of portions 244 of yield links 214. Thus, the yield links 214 yield under lateral loads before yielding or failure of the column or beam, and any damage is limited to the yield links which may be easily removed and replaced.

The buckling-restraint blocks 216 prevent buckling of the yield links under a compressive load. In particular, the relative diameter of bore 260 to the diameter of the center portion 244 of the yield links 214 limits the amount which the yield links may buckle. As set forth above, the center portion 244 may include ribs 250. The enlarged diameter of ribs 250 further limit the amount to which the yield links 214 may buckle within bore 260 of buckling restraint block 216. In arrangements, there may be three ribs 250, but there may be one, two or more than three in alternative arrangements. In further arrangements, ribs 250 may be omitted altogether.

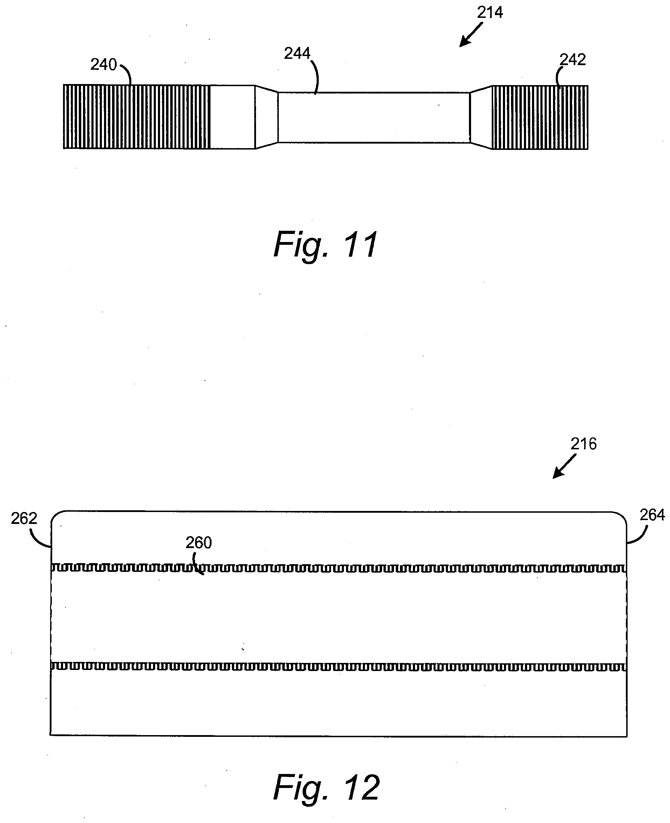

In the arrangements described with respect to Figs. 8 through 10, the link end 242 has a greater diameter than link end 240, thereby allowing the yield link to pass freely through the buckling restraint block 216 until engagement of the threads in link end 242 and block end 264. In the alternative arrangements of Fig. 11, the yield link 214 has ends 240 and 242 with equal diameters, for example 31.8 mm (1.25 inches). In such arrangements, the block 216 may have a bore 260 threaded along its entire length as shown in Fig. 12. The arrangement of Figs. 11 and 12 may operate with or without ribs in the smaller diameter center portion.

In accordance with the arrangements not forming part of the present invention described above with respect to Figs. 1-12, the lateral bracing system has sufficient stiffness and rigidity to provide a high degree of resistance to deflection under applied lateral loads. However, at lateral loads above a controllable and predictable level, the structure of the present arrangement provides for stable yielding of the yield links. In this way, the applied lateral loads are hysteretically dampened from the system, and a high degree of energy is dissipated, thereby preventing damage to the frame. Moreover, the energy dissipation and stable yielding of the yield links allow the frame 100 to withstand repeated deflection under lateral loads without failure.

In the event the links are damaged upon yielding, the lateral bracing system may be restored to its virgin integrity and load bearing capabilities simply by removing and replacing the yield links. The structural frame remains intact and need not be replaced.

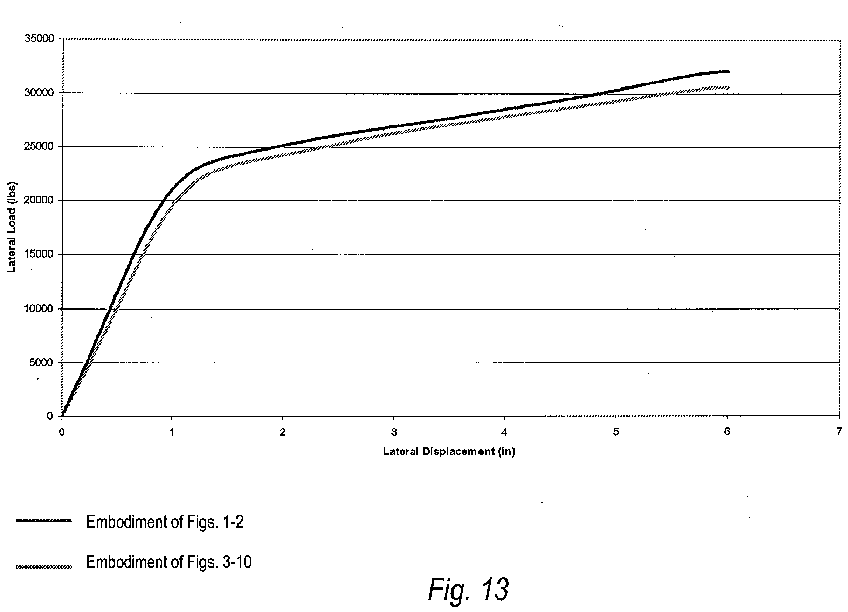

Fig. 13 is a plot of the response of an arrangement of the buckling-restrained braced device 112 of Figs. 1 through 2 and an arrangement of the buckling-restrained braced device 212 of Figs. 3 through 10 for applied lateral loads. As seen, both arrangements perform elastically until their yield point at about 9979.0 kg (22,000 lbs.) lateral load.

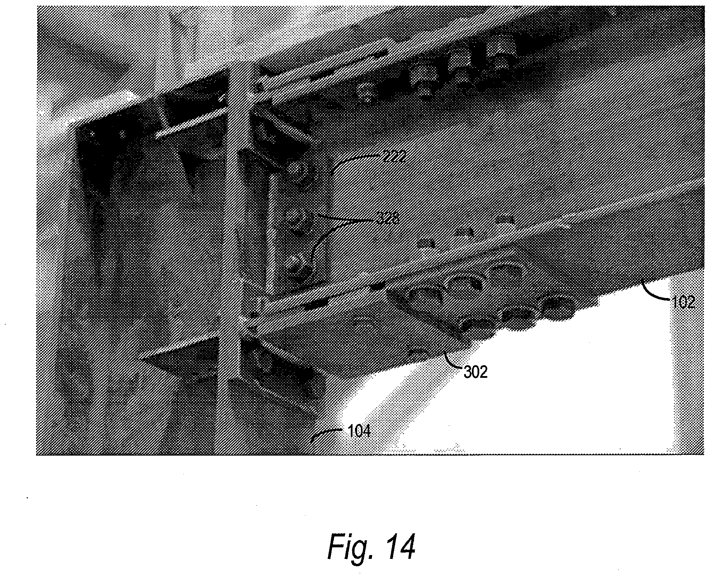

Figs. 14-17 show an embodiment of the present technology including a lateral bracing system 300. In this embodiment, beam stub 110 of the above-described embodiments may be omitted, so that the lateral bracing system 300 connects the beam 102 directly to the column 104.

The lateral bracing system 300 includes a pair of buckling-retrained assemblies 302, which may or may not be identical to each other, with one located on top of the beam 102 and the other below the beam 102. The following description of a buckling-retrained assembly 302 applies to both assemblies 302.

Each buckling-retrained assembly 302 includes a yield member 304 having a column-mounted plate 308, a beam-mounted plate 310, and a yield plate 312 connected between the column-mounted plate and beam-mounted plate. The column-mounted plate 308 may have a vertical portion 308a and a horizontal portion 308b that may be welded together at a right angle. The vertical and horizontal portions 308a, 308b may be affixed to each other by other means, or cast as a single piece in further embodiments.

The horizontal portion 308b may be formed of a flat, unitary construction with beam-mounted plate 310 and yield plate 312. The horizontal portion 308b and plates 308, 310 and 312 may for example be formed from a single piece of 6.35 mm (1/4 inch) steel. The horizontal portion 308b and plates 308, 310 and 312 may for example be formed to other thicknesses in further embodiments.

The column-mounted plate 308 and beam-mounted plate 310 may each have a width (across the width of the flanges of beam 102) approximately equal to or slightly less than the width of the flanges of beam 102, such as for example 178 mm (7.00 inches). The yield plate 312 may have a width (across the width of the flanges of beam 102) that is less than the width of the plates 308, 310. The width of plate 312 may be between 25.4 and 152 mm (1 and 6 inches) in an embodiment, between 25.4 and 76.2 mm (1 and 3 inches) in a further embodiment, and between 50.8 and 76.2 mm (2 and 3 inches) in a further embodiment. The width of yield plate 312 may be other dimensions, with the provision that the yield plate have a smaller width than the column and beam-mounted plates 308, 310.

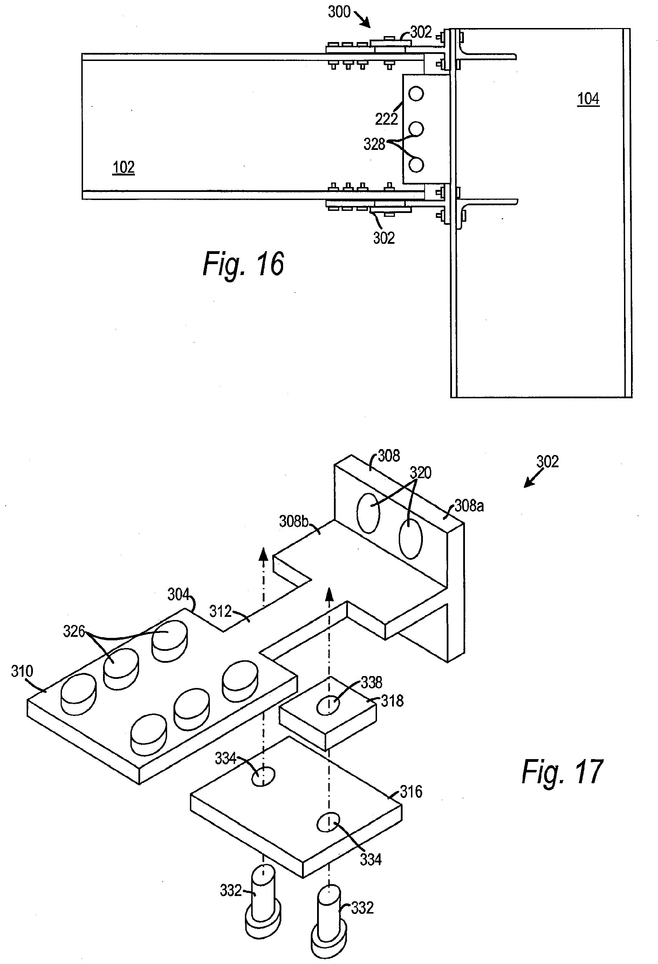

The buckling-retrained assembly 302 further includes a buckling restraint member 316 and a pair of spacer blocks 318 (one of which is omitted from Fig. 17 for clarity). The buckling restraint member 316 may be a flat plate with a length (along a length of beam 102) approximately equal to a length of the yield plate 312. The buckling restraint member 316 may be longer or shorter than the yield plate 312 in further embodiments. The buckling restraint member 316 may be 6.35 mm (% inch) steel, though it may be thicker or thinner in further embodiments.

The spacer blocks 318 are sized to fit in between the horizontal portion 308b of column-mounted plate 308 and beam-mounted plate 310, on either side of yield plate 312, when the buckling-retrained assembly 302 is assembled together as explained below. The spacer blocks 318 have the same thickness as the yield member 304. Stiffeners 230 may also be provided as described above.

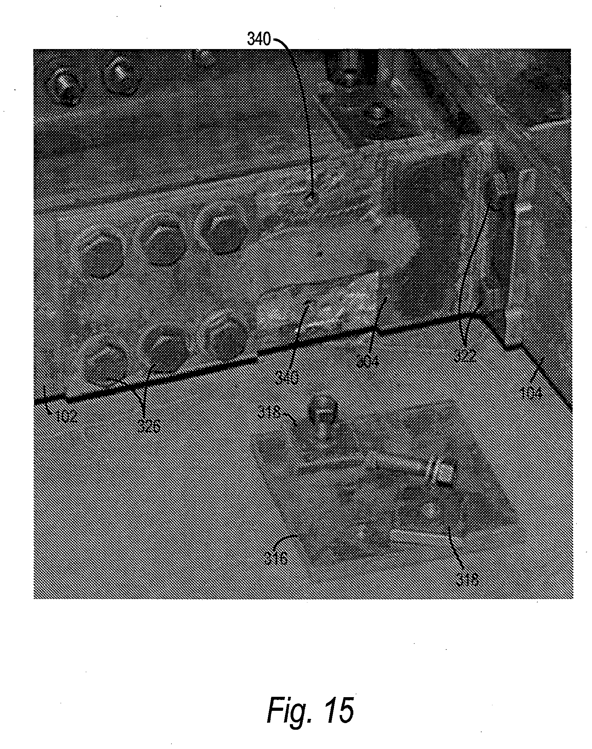

The yield member 304 including column-mounted plate 308, beam-mounted plate 310, and yield plate 312 may be affixed to the column 104, either at the jobsite or remote from the jobsite. In one embodiment, the vertical portion 308a includes holes 320 (Fig. 17) for receiving bolts 322 (for example Fig. 15) above and below the horizontal portion 308b so that the yield member 304 may bolt to the column 104. In further embodiments, it is contemplated that the yield member 304 may alternatively be affixed to the column 104 by welding or gluing.

Thereafter, at the jobsite, the beam-mounted plate 310 may be bolted to the beam 102 via a plurality of bolts 326. While the figures show six bolts 326, there may be more or less than that in further embodiments. At this point, the yield member 304 is affixed to both the beam 102 and column 104. The beam and column may also be attached to each other by a shear tab 222 as described above. Shear tab 222 may be affixed to the column 104 as by welding, gluing or bolting to a flange of column 104 and to the web of beam 102 as by bolts 328. The assembly of the yield member 304 to the beam 102 and column 104 at this stage of assembly is shown for example in Fig. 15.

In embodiments, the buckling restraint assemblies 302 and shear tab 222 may affix beam 102 to column 104 at the jobsite with bolts only, thus simplifying construction by omitting welding. However, in further embodiments, the beam-mounted plate 310 and/or shear tab 222 may be affixed to beam 102 by welding or gluing. In further embodiments, the yield member 304 may be affixed to the beam 102 first, either before or at the jobsite, and then affixed to the column 104.

The buckling restraint member 316 is next affixed to beam 102 over the yield plate 312. As seen for example in Fig. 17, a pair of bolts 332 fit through respective holes 334 in buckling restraint member 316, up through holes 338 in spacers 318, and into holes 340 (Fig. 15) formed in beam 102, where the bolts may receive a nut to fasten the bolts in place. Being the same thickness as the yield member 304, the spacers ensure a uniform load distribution across the buckling restraint member 316 when the bolts 332 are fastened to beam 302 around the yield plate 312.

In operation, the pair of buckling-restrained assemblies 302 operate in tandem to oppose rotation of the beam relative to the column (*i.e.,* rotation about the shear tab 222) under a lateral load. Attempted rotation in a first direction will place the first of the assemblies 302 in tension and the second of the devices in compression. Attempted rotation in the opposite direction will place the second of the assemblies in tension and the first in compression.

The yield plate 312 of the respective assemblies 302 provides high initial stiffness and tensile resistance to relative movement between the column 104 and the beam 102 under lateral loads, but provides stable yielding and energy dissipation under lateral loads above a predictable and controlled level. In particular, the bending strength of the column and beam could be designed to exceed the moment capacity of the pair of yield members 304, and in particular, the thinner center yield plate 312. Thus, the yield plates 312 yield under lateral loads before yielding or failure of the column or beam, and any damage is limited to the yield plates which may be easily removed and replaced. The buckling restraint plates 316 prevent buckling of the yield plates under a compressive load. The shear tab 222 is provided to oppose vertical shear (*i.e.,* along the length of column 104) under a vertical load.

Although the invention has been described in detail herein, it should be understood that the invention is not limited to the embodiments herein disclosed. Various changes, substitutions and modifications may be made thereto by those skilled in the art without departing from the scope of the invention as described and defined by the appended claims.

## Claims

1. A construction, comprising:
a column (104);
a beam (102);
a shear tab (222) affixed between the column (104) and beam (102); and
a lateral bracing system (300) affixed between the column (104) and beam (102), including:
a pair of buckling restraint plates (316), one each on a top and bottom flange of the beam (102), each buckling restraint plate (316) including a first end affixed to an end of the beam (102) and a second end opposite the first end;
a pair of yield members (304), each yield member (304) including a first end affixed to the column (104), and a second end affixed to the beam (102), a yield member (304) of the pair of yield members (304) capable of yielding in tension and compression to dissipate stress within the frame upon a lateral load applied to the beam (102) and/or column (104); and **characterised by**:
one or more spacers (318) in between the beam (102) and the or each buckling restraint plate (316), the one or more spacers (318) being coplanar with and having substantially the same thickness as the or each yield member (304); and
each of the one or more spacers (318) being associated with a bolt (332), each bolt (332) fitting through a respective hole (334) in one of the buckling restraint plates (316), through a hole (338) in the associated spacer (318) and into a respective hole (340) formed in the beam (102) where the bolt receives a nut to fasten the bolt in place.

2. A construction as recited in claim 1, including a pair of spacers (318) in between the beam (102) and the or each buckling restraint plate (316), and a corresponding pair of bolts (332) fitting through respective holes (334) in the or each buckling restraint plate (316), through holes (338) in the spacers (318) and into respective holes (340) formed in the beam (102), where the bolts receive nuts to fasten the bolts in place.

3. A construction as recited in claim 1, wherein the or each yield member (304) includes a middle section or yield plate (312) having a lower strength than the first and second ends, the or each yield member (304) yielding at the middle section or yield plate (312) upon a given tensile force.

4. A construction as recited in claim 3, wherein the middle section or yield plate (312) has a smaller diameter or width than the first and second ends.

5. A construction as recited in claim 4, wherein:
the middle section or yield plate (312) having a smaller diameter or width than the first and second ends defines first and second notches in the or each yield member (304); and
wherein said one or more spacers (318) comprise first and second spacers (318) provided within the first and second notches in the or each yield member (304).

6. A construction as recited in claim 5, further comprising first and second bolts (332), the first and second bolts (332) fitting respectively through first and second holes (334) in one of the buckling restraint plates (316), holes (338) in said first and second spacers (318) and into holes (340) in the beam (102).

7. A construction as recited in any one of claims 1-6, wherein the first end of the or each yield member (304) is bolted to the column (104) and the second end of the or each yield member (304) is bolted to the beam (102).

8. A method of assembling a construction according to any of claims 1 to 7 having a beam (102), column (104) and lateral bracing system (300) therebetween, comprising the steps of:
(a) bolting a yield member (304) to a first one of the beam (102) and column (104);
(b) affixing a buckling restraint plate (316) to the beam (102), covering a yield plate (312) of the yield member (304);
(c) bolting the yield member (304) to a second one of the beam (102) and column (104); and **characterised by**:
(d) providing one or more spacers (318) in between the beam (102) and the buckling restraint plate (316), each spacer (318) being coplanar with and having substantially the same thickness as the yield member (304);
the method further **characterised in that** each of the one or more spacers (318) is associated with a bolt (332), each bolt (332) fitting through a respective hole (334) in the buckling restraint plate (316), through a hole (338) in the associated spacer (318) and into a respective hole (340) formed in the beam (102) where the bolt receives a nut to fasten the bolt in place.

9. A method as recited in claim 8, said step (a) of bolting a yield member (304) to a first one of the beam (102) and column (104) comprising the step of affixing the yield member (304) to one of the beam (102) and column (104) prior to the beam (102) and column (104) arriving at a worksite.

10. A method as recited in claim 8 or 9, the yield member (304) affixed in said step (a) and the buckling restraint plate (316) affixed in said step (b) together resisting lateral deflection of the beam (102) relative to the column (104), but yielding at the yield plate (312) of the yield member (304) upon loads above a threshold level.

11. A method as recited in claim 8, 9 or 10, the yield member (304) affixed in said step (a) and the buckling restraint plate (316) affixed in said step (b) together resisting lateral deflection of the beam (102) relative to the column (104) by placing tensile loads on the yield plate (312) by the yield plate (312) being constrained against yielding by the yield strength of the yield plate (312).

12. A method as recited in any one of claims 8-11, the yield member (304) affixed in said step (a) and the buckling restraint plate (316) affixed in said step (b) together resisting lateral deflection of the beam (102) relative to the column (104) by placing compressive forces on the yield plate (312) by the yield plate (312) being constrained against buckling by the buckling restraint plate (316).

## Patentansprüche

1. Konstruktion, umfassend:
eine Säule (104);
einen Balken (102);
einen Scheransatz (222), der zwischen der Säule (104) und dem Balken (102) befestigt ist; und
ein seitliches Stützsystem (300), das zwischen der Säule (104) und dem Balken (102) befestigt ist, einschließend:
ein Paar Knickbegrenzungsplatten (316), jeweils eine an einem oberen und unteren Flansch des Balkens (102), wobei jede Knickbegrenzungsplatte (316) ein erstes Ende, das an einem Ende des Balkens (102) befestigt ist, und ein zweites Ende gegenüber dem ersten Ende einschließt:
ein Paar Dehnelemente (304), wobei jedes Dehnelement (304) ein erstes Ende, das an der Säule (104) befestigt ist, und ein zweites Ende, das an dem Balken (102) befestigt ist, einschließt, wobei ein Dehnelement (304) des Paares von Dehnelementen (304) sich bei Zugspannung und Kompression dehnen kann, um eine Belastung innerhalb des Rahmens bei einer seitlichen Last, die auf den Balken (102) und/oder die Säule (104) ausgeübt wird, abzuleiten; und **gekennzeichnet durch**:
einen oder mehrere Abstandhalter (318) zwischen dem Balken (102) und der oder jeder Knickbegrenzungsplatte (316), wobei der eine oder die mehreren Abstandhalter (318) koplanar zu dem oder jedem Dehnelement (304) sind und im Wesentlichen die gleiche Dicke wie das oder jedes Dehnelement (304) aufweisen; und
einen oder mehrere Abstandhalter (318), einem Bolzen (332) zugeordnet, wobei jeder Bolzen (332) **durch** ein jeweiliges Loch (334) in einer der Knickbegrenzungsplatten (316), **durch** ein Loch (338) in dem zugeordneten Abstandhalter (318) und in ein jeweiliges Loch (340), das in dem Balken (102) gebildet ist, passt, wobei der Bolzen eine Mutter zum ortsfesten Befestigen des Bolzens aufnimmt.

2. Konstruktion nach Anspruch 1, einschließend ein Paar von Abstandhaltern (318) zwischen dem Balken (102) und der oder jeder Knickbegrenzungsplatte (316), und ein entsprechendes Paar von Bolzen (332), das durch die jeweiligen Löcher (334) in der oder jeder Knickbegrenzungsplatte (316), durch Löcher (338) in den Abstandhaltern (318) und in jeweilige Löcher (340), die in dem Balken (102) gebildet sind, passt, wobei die Bolzen Muttern zum ortsfesten Befestigen der Bolzen aufnehmen.

3. Konstruktion nach Anspruch 1, wobei das oder jedes Dehnelement (304) einen mittleren Abschnitt oder eine Dehnplatte (312) einschließt, die eine geringere Stärke als das erste und zweite Ende aufweist, wobei sich das oder jedes Dehnelement (304) am mittleren Abschnitt oder der Dehnplatte (312) bei einer vorgegebenen Zugkraft dehnt.

4. Konstruktion nach Anspruch 3, wobei der mittlere Abschnitt oder die Dehnplatte (312) einen kleineren Durchmesser oder eine kleinere Breite als das erste und das zweite Ende aufweist.

5. Konstruktion nach Anspruch 4, wobei:
der mittlere Abschnitt oder die Dehnplatte (312), die einen kleineren Durchmesser oder Breite als das erste und zweite Ende aufweist, erste und zweite Kerben in dem oder jedem Dehnelement (304) definiert; und
wobei der eine oder die mehreren Abstandhalter (318) erste und zweite Abstandhalter (318) umfassen, die innerhalb der ersten und zweiten Kerben in dem oder jedem Dehnelement (304) bereitgestellt sind.

6. Konstruktion nach Anspruch 5, weiter umfassend erste und zweite Bolzen (332), wobei die ersten und zweiten Bolzen (332) jeweils durch erste und zweite Löcher (334) in einer der Knickbegrenzungsplatten (316), Löcher (338) in dem ersten und zweiten Abstandhalter (318) und in Löcher (340) in dem Balken (102) passen.

7. Konstruktion nach einem der Ansprüche 1 - 6, wobei das erste Ende des oder jedes Dehnelements (304) mit der Säule (104) verschraubt ist und das zweite Ende des oder jedes Dehnelements (304) mit dem Balken (102) verschraubt ist.

8. Verfahren zum Zusammenbauen einer Konstruktion nach einem der Ansprüche 1 bis 7, die einen Balken (102), eine Säule (104) und ein seitliches Stützsystem (300) dazwischen aufweist, umfassend die Schritte:
(a) Verschrauben eines Dehnelements (304) mit einem ersten von dem Balken (102) und der Säule (104);
(b) Befestigen einer Knickbegrenzungsplatte (316) an dem Balken (102), die eine Dehnplatte (312) des Dehnelements (304) bedeckt;
(c) Verschrauben des Dehnelements (304) mit einem zweiten von dem Balken (102) und der Säule (104); und **gekennzeichnet durch**:
(d) Bereitstellen einer oder mehrerer Abstandhalter (318) zwischen dem Balken (102) und der Knickbegrenzungsplatte (316), wobei jeder Abstandhalter (318) koplanar zum Dehnelement ist und im Wesentlichen die gleiche Dicke wie das Dehnelement (304) aufweist;
wobei das Verfahren weiter **dadurch** gekennzeichnet ist, dass jeder der einen oder mehreren Abstandhalter (318) einem Bolzen (332) zugeordnet ist, wobei jeder Bolzen (332) **durch** ein jeweiliges Loch (334) in der Knickbegrenzungsplatte (316), **durch** ein Loch (338) in dem zugeordneten Abstandhalter (318) und in ein jeweiliges Loch (340), das in dem Balken (102) gebildet ist, passt, wobei der Bolzen eine Mutter zum ortsfesten Befestigen des Bolzens aufnimmt.

9. Verfahren nach Anspruch 8, wobei der Schritt (a) des Verschraubens eines Dehnelements (304) mit einem ersten von dem Balken (102) und der Säule (104) den Schritt des Befestigens des Dehnelements (304) an einem von dem Balken (102) und der Säule (104) umfasst, bevor der Balken (102) und die Säule (104) an einer Arbeitsstätte ankommen.

10. Verfahren nach Anspruch 8 oder 9, wobei das Dehnelement (304), das in Schritt (a) befestigt wird, und die Knickbegrenzungsplatte (316), die in Schritt (b) befestigt wird, zusammen der seitlichen Ablenkung des Balkens (102) in Bezug auf die Säule (104) widerstehen, sich aber an der Dehnplatte (312) des Dehnelements (304) bei Lasten oberhalb eines Schwellenwertes dehnen.

11. Verfahren nach Anspruch 8, 9 oder 10, wobei das Dehnelement (304), das in Schritt (a) befestigt wird, und die Knickbegrenzungsplatte (316), die in Schritt (b) befestigt wird, zusammen der seitlichen Ablenkung des Balkens (102) in Bezug auf die Säule (104) widerstehen, indem die Zuglasten auf die Dehnplatte (312) platziert werden, indem die Dehnplatte (312) gegen das Dehnen durch die Dehnstärke der Dehnplatte (312) begrenzt wird.

12. Verfahren nach einem der Ansprüche 8 -11, wobei das Dehnelement (304), das in Schritt (a) befestigt wird, und die Knickbegrenzungsplatte (316), die in Schritt (b) befestigt wird, zusammen der seitlichen Ablenkung des Balkens (102) in Bezug auf die Säule (104) widerstehen, indem Kompressionskräfte auf der Dehnplatte (312) platziert werden, indem die Dehnplatte (312) gegen das Knicken durch die Knickbegrenzungsplatte (316) begrenzt wird.

## Revendications

1. Structure, comprenant :
un poteau (104) ;
une poutre (102) ;
une patte de cisaillement (222) fixée entre le poteau (104) et la poutre (102) ; et
un système de contreventement latéral (300) fixé entre le poteau (104) et la poutre (102), comprenant :
une paire de plaques de retenue contre le flambement (316), une de chaque sur une membrure supérieure et une membrure inférieure de la poutre (102), chaque plaque de retenue contre le flambement (316) comportant une première extrémité fixée à une extrémité de la poutre (102) et une seconde extrémité opposée à la première extrémité ;
une paire d'éléments de fléchissement (304), chaque élément de fléchissement (304) comportant une première extrémité fixée au poteau (104) et une seconde extrémité fixée à la poutre (102), un élément de fléchissement (304) de la paire d'éléments de fléchissement (304) pouvant fléchir en traction et en compression pour dissiper les contraintes s'exerçant dans le cadre lors d'une charge latérale appliquée à la poutre (102) et/ou au poteau (104) ; et **caractérisée par** :
une ou plusieurs entretoises (318) entre la poutre (102) et la plaque de retenue contre le flambement (316) ou chacune desdites plaques, les une ou plusieurs entretoises (318) se trouvant dans le même plan et ayant sensiblement la même épaisseur que l'élément de fléchissement (304) ou chacun desdits éléments ; et
chacune des une ou plusieurs entretoises (318) étant associée à un boulon (332), chaque boulon (332) entrant dans un trou respectif (334) dans une des plaques de retenue contre le flambement (316), dans un trou (338) dans l'entretoise associée (318) et arrivant dans un trou respectif (340) formé dans la poutre (102) où le boulon reçoit un écrou destiné à fixer le boulon à sa place.

2. Structure selon la revendication 1, comportant une paire d'entretoises (318) entre la poutre (102) et la plaque de retenue contre le flambement (316) ou chacune desdites plaques, et une paire correspondante de boulons (332) entrant dans des trous respectifs (334) de la plaque de retenue contre le flambement (316) ou de chacune desdites plaques, dans des trous (338) des entretoises (318) et arrivant dans des trous respectifs (340) formés dans la poutre (102) où les boulons reçoivent des écrous destinés à fixer les boulons à leur place.

3. Structure selon la revendication 1, dans laquelle l'élément de fléchissement (304) ou chacun desdits éléments comporte une partie médiane ou plaque de fléchissement (312) ayant une résistance inférieure à celle des première et seconde extrémités, l'élément de fléchissement (304) ou chacun desdits éléments fléchissant au niveau de la partie médiane ou plaque de fléchissement (312) sous une force de traction donnée.

4. Structure selon la revendication 3, dans laquelle la partie médiane ou plaque de fléchissement (312) a un diamètre ou une largeur inférieurs à ceux des première et seconde extrémités.

5. Structure selon la revendication 4, dans laquelle :
la partie médiane ou plaque de fléchissement (312) ayant un diamètre ou une largeur inférieurs à ceux des première et seconde extrémités définit des première et secondes encoches dans l'élément de fléchissement (304) ou chacun desdits éléments ; et
dans laquelle lesdites une ou plusieurs entretoises (318) comprennent des première et seconde entretoises (318) prévues dans les première et secondes encoches de l'élément de fléchissement (304) ou de chacun desdits éléments.

6. Structure selon la revendication 5, comprenant en outre des premier et second boulons (332), les premier et second boulons (332) entrant respectivement dans des premier et second trous (334) d'une des plaques de retenue contre le flambement (316), des trous (338) desdites première et seconde entretoises (318) et arrivant dans des trous (340) de la poutre (102).

7. Structure selon l'une quelconque des revendications 1 à 6, dans laquelle la première extrémité de l'élément de fléchissement (304) ou de chacun desdits éléments est boulonnée au poteau (104) et la seconde extrémité de l'élément de fléchissement (304) ou de chacun desdits éléments est boulonnée à la poutre (102).

8. Procédé d'assemblage d'une structure selon l'une quelconque des revendications 1 à 7 comportant une poutre (102), un poteau (104) et un système de contreventement latéral (300) entre les deux, comprenant les étapes suivantes :
a) le boulonnage d'un élément de fléchissement (304) à un premier de la poutre (102) et du poteau (104) ;
b) la fixation d'une plaque de retenue contre le flambement (316) à la poutre (102), couvrant une plaque de fléchissement (312) de l'élément de fléchissement (304) ;
c) le boulonnage de l'élément de fléchissement (304) à un second de la poutre (102) et du poteau (104) ; et **caractérisé par** :
d) la fourniture d'une ou plusieurs entretoises (318) entre la poutre (102) et la plaque de retenue contre le flambement (316), chaque entretoise (318) se trouvant dans le même plan et ayant sensiblement la même épaisseur que l'élément de fléchissement (304) ;
le procédé étant **caractérisé en outre en ce que** chacune des une ou plusieurs entretoises (318) est associée à un boulon (332), chaque boulon (332) entrant dans un trou respectif (334) de la plaque de retenue contre le flambement (316), dans un trou (338) de l'entretoise associée (318) et arrivant dans un trou respectif (340) formé dans la poutre (102) où le boulon reçoit un écrou destiné à fixer le boulon à sa place.

9. Procédé selon la revendication 8, ladite étape (a) de boulonnage d'un élément de fléchissement (304) à un premier de la poutre (102) et du poteau (104) comprenant l'étape de fixation de l'élément de fléchissement (304) à l'un de la poutre (102) et du poteau (104) avant l'arrivée de la poutre (102) et du poteau (104) sur un chantier.

10. Procédé selon les revendications 8 ou 9, l'élément de fléchissement (304) fixé lors de ladite étape (a) et la plaque de retenue contre le flambement (316) fixée lors de ladite étape (b) résistant conjointement à une déflexion latérale de la poutre (102) par rapport au poteau (104), mais fléchissant au niveau de la plaque de fléchissement (312) de l'élément de fléchissement (304) en cas de charges supérieures à un niveau seuil.

11. Procédé selon les revendications 8, 9 ou 10, l'élément de fléchissement (304) fixé lors de ladite étape (a) et la plaque de retenue contre le flambement (316) fixée lors de ladite étape (b) résistant conjointement à une déflexion latérale de la poutre (102) par rapport au poteau (104) par un placement des charges de traction sur la plaque de fléchissement (312), la plaque de fléchissement (312) étant contrainte contre le fléchissement par la résistance au fléchissement de la plaque de fléchissement (312).

12. Procédé selon l'une quelconque des revendications 8 à 11, l'élément de fléchissement (304) fixé lors de ladite étape (a) et la plaque de retenue contre le flambement (316) fixée lors de ladite étape (b) résistant conjointement à une déflexion latérale de la poutre (102) par rapport au poteau (104) par un placement des charges de compression sur la plaque de fléchissement (312), la plaque de fléchissement (312) étant contrainte contre le flambement par la plaque de retenue contre le flambement (316).
